# EUROPÄISCHE PATENTSCHRIFT

(11) **EP 1 862 405 B1**
(45) Veröffentlichungstag und Bekanntmachung des Hinweises auf die Patenterteilung: **28.01.2009**
(21) Anmeldenummer: 07108774.6
(22) Anmeldetag: 23.05.2007
(51) Int. Cl.: B65G 1/04, B66F 9/07

(54) **Verfahren zum Greifen eines Stückgutes mittels Greifelementen einer Ein- und Auslagervorrichtung und Vorrichtung hierfür**
Method for gripping piece goods using gripper devices of an input and output system and device therefor
Procédé destiné à saisir une marchandise à l'aide d'éléments de préhension dans un dispositif de stockage et de déstockage et dispositif correspondant

(30) Priorität: 02.06.2006 DE 102006025938
(43) Veröffentlichungstag der Anmeldung: 05.12.2007
(73) Patentinhaber: Dematic GmbH, 63073 Offenbach am Main (DE)
(72) Erfinder: Genius, Wolfgang, 52062 Aachen (DE); Ostholt, Roman, 52074 Aachen (DE); Klassen, Bettina, 52074 Aachen (DE); Ramm, Marco, 52066 Aachen (DE); Sacken, Christoph, 59199 Bönen (DE)
(74) Vertreter: Moser, Jörg Michael

(56) Entgegenhaltungen:
- DE-U1-4202004 016 70

## Beschreibung

Die Erfindung betrifft ein Verfahren zum Greifen eines Stückgutes mittels Greifelementen einer Ein- und Auslagerungsvorrichtung, insbesondere eines Regalbediengerätes, bei dem für das Greifen des Stückgutes Greifteile der Greifelemente von mindestens zwei gegenüberliegenden Seiten aus einer Ruhestellung in eine Greifstellung auf das Stückgut zu bewegt werden, bis die Greifteile an dem Stückgut anliegen, und anschließend von der Ein- und Auslagerungsvorrichtung in Ein- und Auslagerungsrichtung gefördert werden.

Auch betrifft die Erfindung eine Ein- und Auslagerungsvorrichtung, insbesondere eines Regalbediengerätes, mit in Ein- und Auslagerungsrichtung bewegbaren Greifelementen mit Greifteilen, die für das Greifen eines Stückgutes von mindestens zwei gegenüberliegenden Seiten aus einer Ruhestellung in eine Greifstellung auf das Stückgut zu bewegbar sind, bis die Greifteile an dem Stückgut anliegen.

Aus dem deutschen Gebrauchsmuster DE 20 2004 016 704 U1 ist eine Ein- und Auslagerungsvorrichtung eines Regalbediengerätes bekannt. Mit dieser Ein- und Auslagerungsvorrichtung können Lasten beziehungsweise Ladehilfsmittel mit oder ohne Lasten, wie beispielsweise Behälter, Kartons und Tablare, in ein Regal eingelagert beziehungsweise aus diesem Regal ausgelagert werden. Diese Ein- und Auslagerungsvorrichtung ist in üblicher Weise auf einem an einem Mast vertikal verfahrbaren Hubtisch des Regalbediengerätes angeordnet und besteht im Wesentlichen aus einem Abschnitt einer Rollenbahn sowie einer Greifvorrichtung. Die Greifvorrichtung weist zwei schwertartige Greifelemente auf, die in ihrer eingefahrenen Einfahrstellung seitlich neben der Rollenbahn und somit parallel zueinander und voneinander beabstandet angeordnet sind. Die Greifelemente sind aus ihrer Einfahrstellung in Richtung eines Abstellplatzes in dem Regal teleskopartig in ihre Ausfahrstellung ausfahrbar. Hierfür ist jedes der beiden Greifelemente über ein ebenfalls schwertförmiges Zwischenelement in einem Grundrahmen horizontal verschiebbar geführt. Die Grundrahmen sind dann entsprechend jeweils neben der Rollenbahn auf dem Hubtisch befestigt. Um eine Last beziehungsweise ein Ladehilfsmittel aus dem Regal auslagern zu können, werden die Greifelemente nach dem Einfahren in das Regal zum Ergreifen der Last beziehungsweise des Ladehilfsmittels aufeinander zu bewegt. Außerdem sind an den einander zugewandten Flächen der Greifelemente schwenk- oder klappflügelartige Greifteile angeordnet. Die Greifteile sind aus elastischen Kautschuk- oder Kunststoffmaterialen hergestellt. Anstatt selbst elastisch ausgebildet zu sein, können die Greifteile auch an den Greifelementen federnd abgestützt sein. Dadurch dass die Greifteile elastisch sind, soll die Last beziehungsweise das Ladehilfsmittel selbsttätig formschlüssig und/oder kraftschlüssig ergriffen werden, wodurch deren Ein- und Auslagerung besonders problemlos und sicher sein soll.

Aus der DE-PS 22 41 213 ist ein Regal mit in horizontaler Richtung verschiebbaren Behältern sowie mindestens einem diesen Behältern zugeordneten, längs des Regals verfahrbarem Bedienungsgerät bekannt, das mit einem in vertikaler Richtung anhebbarem und wiederabsenkbarem Hubtisch ausgerüstet ist, der mindestens eine in der Schubrichtung der Behälter hin- und hergehende, mit dem letzteren kuppelbare Zug- und Schubeinrichtung aufweist. Ferner besteht die Kupplungseinrichtung der zu dem Hubtisch gehörigen Zug- und Schubeinrichtung aus einem Klauenpaar, dessen gegeneinander gerichtete, zangenartig miteinander zusammenwirkende und gegebenenfalls elektromagnetisch steuerbare Greifarme in an den Hubtisch zugekehrten Stirnseiten der Behälter befindliche Kupplungselemente eingreifen oder die selben hintergreifen.

Die DE 42 35 576 A1 offenbart ein Lastaufnahmemittel zur Beschickung von Regalen mit Lagerbehältern, die derart im Regal gehalten sind, dass mindestens ein Teil ihres Bodens für einen Mitnehmer am Lastaufnahmemittel von unten zugänglich ist, wobei das Lastaufnahmemittel mindestens auf eine Seite hin mit einem Regal zusammenwirkt, wobei das Lastaufnahmemittel einen ausfahrbaren Schlitten aufweist mit einem flachen Bodenbereich und mindestens einem seitlich derart angeordneten Mitnehmerantrieb, dass er zusammen mit dem Schlitten in vertikale Regalzwischenräume einführbar ist.

Die DE 203 03 376 U1 offenbart eine Vorrichtung zum Ein- und Auslagern von Behältnissen, die auf Regalböden von Regalfächern eines Kleinteillagers wie beispielsweise eines Hochregallagers zwischenlagerbar sind, mit einer Greifvorrichtung, die an einem vor den Regalfächern verfahrbarem Regalbediengerät angebracht und die in jeweils ein Regalfach in X-Richtung eintauchbar ist, wobei die Greifvorrichtung in Z-Richtung kraftschlüssig an ein- oder auslagernden Behältnissen anlegbar ist.

Die DE 81 19 291 U1 offenbart eine Transportvorrichtung für Lasten mit einem ausfahrbaren Greifer, wobei der Greifer verstellbare Klammbacken trägt. Der Greifer besteht dabei aus zwei parallel zueinander angeordneten, ausfahrbaren Profilstücken, welche die Klemmbacken tragen. Dabei sind die Profilstücke aufeinander zubewegbar ausgeführt.

Auch soll es allgemein bekannt sein, Greifteile in Form von Bürsten auszubilden, um die gewünschte Elastizität zu erreichen.

Ausgehend von diesem Stand der Technik liegt der Erfindung die Aufgabe zu Grunde, ein Verfahren zum Greifen eines Stückgutes mittels Greifelementen einer Ein- und Auslagerungsvorrichtung und eine Vorrichtung hierfür zu schaffen, mit denen bei geringer Baugröße eine sichere Ein- und Auslagerung erzielt wird.

Diese Aufgabe wird durch ein Verfahren zum Greifen eines Stückgutes mittels Greifelementen einer Ein- und Auslagerungsvorrichtung, insbesondere eines Regalbediengerätes, mit den Merkmalen des Anspruchs 1 und eine Ein- und Auslagerungsvorrichtung, insbesondere eines Regalbediengerätes, mit den Merkmalen des Anspruchs 4 gelöst. Vorteilhafte Ausgestaltungen der Erfindung sind in den Ansprüchen 2 bis 3 und 5 bis 14 angegeben.

Erfindungsgemäß wird bei einem Verfahren zum Greifen eines Stückgutes mittels Greifelementen einer Ein- und Auslagerungsvorrichtung, insbesondere eines Regalbediengerätes, bei dem für das Greifen des Stückgutes Greifteile der Greifelemente von mindestens zwei gegenüberliegenden Seiten aus einer Ruhestellung in eine Greifstellung auf das Stückgut zu bewegt werden, bis die Greifteile an dem Stückgut anliegen, und anschließend von der Ein- und Auslagerungsvorrichtung in Ein- und Auslagerungsrichtung gefördert werden, eine sichere Ein- und Auslagerung bei geringer Baugröße dadurch erzielt, dass die Greifteile aus der Ruhestellung in die Greifstellung um eine oder mehrere quer zur Ein- und Auslagerungsrichtung verlaufende Achsen verschwenkt werden.

Hierdurch wird erreicht, dass die Greifelemente mit ihren in Ruhestellung eingeschwenkten Greifteilen sehr schmal sind und somit auch Stückgüter ergreifen können, neben denen seitlich nur wenig Platz vorhanden ist. Die ist besonders wichtig, wenn mittels der Ein- und Auslagerungsrichtung Stückgüter, die in Lagerplätzen eines Regals ruhen, in die Lagerplätze hinein oder aus diesen hinaus gefördert werden. In Regalen führt eine Minimierung des für die Ein- und Auslagerung seitlich neben den Stückgütern erforderlichen Raum direkt zu einer Erhöhung der Ausnutzung des Lageraums. Auch können mit den schwenkbaren Greifteilen besonders gut auch Stückgüter unterschiedlicher Breite innerhalb eines vorbestimmten Breitenbereiches ergriffen werden, da die ausschwenkbaren Greifteile zusätzlich flexibel sind. Beispielsweise sei hier ein Breitenbereich von 250mm bis 400 mm genannt. Auch werden in vorteilhafter Weise die Stückgüter durch den Greifvorgang zu einer virtuellen Achse ausgerichtet. Des Weiteren werden die Stückguter durch die Greifteile während der Ein- und Auslagerungsbewegung geführt und gegen unbeabsichtigtes Bewegen gesichert. Ferner wird die Anzahl der erforderlichen Antriebe und der Sensorik minimiert.

Zusätzlich ist nach der Erfindung vorgesehen, dass die Greifteile in eine erste Gruppe und eine zweite Gruppe geteilt sind, die Greifteile der ersten Gruppe in ihrer Ruhestellung und in ihrer Greifstellung in Auslagerungsrichtung gerichtet sind, die Greifteile der zweiten Gruppe in ihrer Ruhestellung und in ihrer Greifstellung in Einlagerungsrichtung gerichtet sind und die Greifteile der ersten Gruppe gegenläufig zu den Greifteilen der zweiten Gruppe verschwenkt werden. Somit sind immer die Hälfte der Greifteile in Ein- oder Auslagerungsrichtung ausgerichtet und können somit besonders wirksam die Schiebekräfte der Ein- und Auslagerungsvorrichtung auf das Stückgut übertragen. Die gegenläufige Ausrichtung der Greifteile stellt eine eigenständig erfinderische Idee dar.

Im Zusammenhang mit der Handhabung von im Wesentlichen quaderförmigen Stückgütern ist es besonders vorteilhaft, dass für das Greifen des Stückgutes die Greifteile der Greifelemente von zwei gegenüberliegenden Seiten auf das Stückgut aus der Ruhestellung in die Greifstellung zu bewegt werden und von der Ein- und Auslagerungsvorrichtung in einer im Wesentlichen horizontalen Ein- und Auslagerungsrichtung gefördert werden.

Besonders sicher gestaltet sich der Greifvorgang und auch eine automatische Anpassung an verschiedene Breiten der Stückgüter wird erreicht, wenn die Greifelemente während der Schwenkbewegung aus der Ruhestellung in die Greifstellung bei Kontakt mit dem Stückgut elastisch nachgeben.

Erfindungsgemäß wird bei einer Ein- und Auslagerungsvorrichtung, insbesondere eines Regalbediengerätes, mit in einer Ein- und Auslagerungsrichtung bewegbaren Greifelementen mit Greifteilen, die für das Greifen eines Stückgutes von mindestens zwei gegenüberliegenden Seiten aus einer Ruhestellung in eine Greifstellung auf das Stückgut zu bewegbar sind, bis die Greifteile an dem Stückgut anliegen, eine sichere Ein- und Auslagerung bei geringer Baugröße dadurch erzielt, dass die Greifteile aus der Ruhestellung in die Greifstellung um eine oder mehrere quer zur Ein- und Auslagerungsrichtung verlaufende Achsen verschwenkbar sind. Dabei ist vorgesehen, dass die aus dem Greifelement herausragenden Greifteile in eine erste Gruppe und eine zweite Gruppe geteilt sind, die Greifteile der ersten Gruppe in ihrer Ruhestellung und in ihrer Greifstellung in Auslagerungsrichtung gerichtet sind und die Greifteile der zweiten Gruppe in ihrer Ruhestellung und in ihrer Greifstellung in Einlagerungsrichtung gerichtet sind. Somit sind immer die Hälfte der Greifteile in Ein- oder Auslagerungsrichtung ausgerichtet und können somit besonders wirksam die Schiebekräfte der Ein- und Auslagerungsvorrichtung auf das Stückgut übertragen.

In Bezug auf die hiermit verbundenen Vorteile wird auf die vorhergehende Beschreibung zu dem erfindungsgemäßen Verfahren verwiesen.

Ein besonders einfache Anpassung der Greifelemente an verschiedene Stückgutbreiten und -formen wird mit der Erfindung dadurch erreicht, dass eine Vielzahl von Greifteilen an einem Tragrahmen des jeweiligen Greifelementes angeordnet sind und die Greifteile jeweils an ihrem dem Stückgut zugewandten Ende einen flexiblen Greifarm aufweisen. Nicht an der Seite des Stückguts anliegende Greifarme befinden sich dann vor, hinter und über dem Stückgut und können dessen Ein- und Auslagerung unterstützen, wenn sie entsprechend vorne, hinten oder oben anliegen.

Besonders flexibel aber auch hinreichend stabil wird der Greifarm, wenn er streifenförmig ist. Grundsätzlich wird eine Borstenform auch möglich sein.

Ein sicheres Handhaben der Stückgüter wird möglich, wenn die Greifteile in Ein- und Auslagerungsrichtung bürstenartig nebeneinander und übereinander an dem Greifelement angeordnet sind.

Konstruktiv besonders einfach ist, dass die Greifteile als Winkelhebel mit einem Stellarm und einem Greifarm ausgebildet sind und jedes Greifteil im Bereich seines Winkel über eine Öffnung in dem Greifteil an einer quer zur Ein- und Auslagerungsrichtung ausgerichteten Achse gelagert ist, die an dem Greifelement befestigt ist.

Für einen einfachen Antrieb aller Greifelemente ist vorgesehen, dass die Stellarme mit einem Stellantrieb für die Bewegung der Greifteile aus der Ruhestellung in die Greifstellung und umgekehrt verbunden sind.

In konstruktiv einfacher Ausgestaltung ist vorgesehen, dass der Stellantrieb im Wesentlichen aus einen plattenförmigen Stellelement mit einer Vielzahl von Löchern für die Aufnahme der Stellarme besteht und das Stellelement für die Bewegung der Greifteile aus der Ruhestellung in die Greifstellung und umgekehrt von dem Stellantrieb in Einlagerungsrichtung oder Auslagerungsrichtung verschiebbar ist.

Damit dieser Stellantrieb die gegenläufige Bewegung der beiden Gruppen von Greifteilen bewirken kann, ist vorgesehen, dass ein erstes plattenförmiges Stellelement und ein zweites plattenförmiges Stellelement parallel und mit geringem Abstand zueinander in dem Greifelement angeordnet sind und die Stellarme der ersten Gruppe der Greifteile mit dem ersten Stellelement und die Stellarme der zweiten Gruppe der Greifteile mit dem zweiten Stellelement verbunden sind.

Im Zusammenhang mit der Handhabung von im Wesentlichen quaderförmigen Stückgütern ist es besonders vorteilhaft, dass zwei Greifelemente in einer gemeinsamen Ebene gegenüberliegend und mit Abstand für das Ergreifen eines Stückguts an der Ein-und Auslagerungsvorrichtung angeordnet sind und die Greifelemente in Ein- und Auslagerungsrichtung teleskopartig ein- und ausfahrbar sind.

In bevorzugter Ausgestaltung ist vorgesehen, dass die Ein- und Auslagerungsrichtung horizontal ist. Hierbei werden die Stückgüter seitlich von den Greifelementen ergriffen und in Ein- und Auslagerungsvorrichtung gezogen oder geschoben.

Um zwei oder mehrere Stückgüter, die in Ein- und Auslagerungsrichtung hintereinander angeordnet sind, mit einem Greifvorgang ein- oder auslagern zu können, ist vorgesehen, dass die Greifelemente jeweils einen ersten Abschnitt und einen zweiten Abschnitt aufweisen, die in Ein- und Auslagerungsrichtung gesehen hintereinander angeordnet sind, und von jedem der Abschnitte jeweils ein Stückgut greifbar ist. Somit können von nur einer Ein- und Auslagerungsvorrichtung sicher und parallel zwei Stückgüter unterschiedlicher Breiten gehandhabt werden. Die flexiblen Greifteile ermöglichen das sichere Ergreifen der verscheiden breiten Stückgüter. Grundsätzlich ist eine Trennung in zwei Abschnitte nicht erforderlich, da allein die Länge der Greifelemente und die der die Anzahl der zu handhabenden Stückgüter bestimmt.

Nachfolgend wird die Erfindung an Hand eines in einer Zeichnung dargestellten Ausführungsbeispiels näher erläutert. Es zeigen:
Figur 1 eine perspektivische schematische Ansicht einer Ein- und Auslagerungsvorrichtung für Stückgüter,
Figur 2 eine Draufsicht auf die Greifelemente von Figur 1,
Figur 3 eine vergrößerte perspektivische Ansicht eines Greifelementes nach Figur 1,
Figur 4 eine vergrößerte Detailansicht eines Greifteils nach Figur 1 und
Figur 5 eine schematische Draufsicht auf Figur 3.

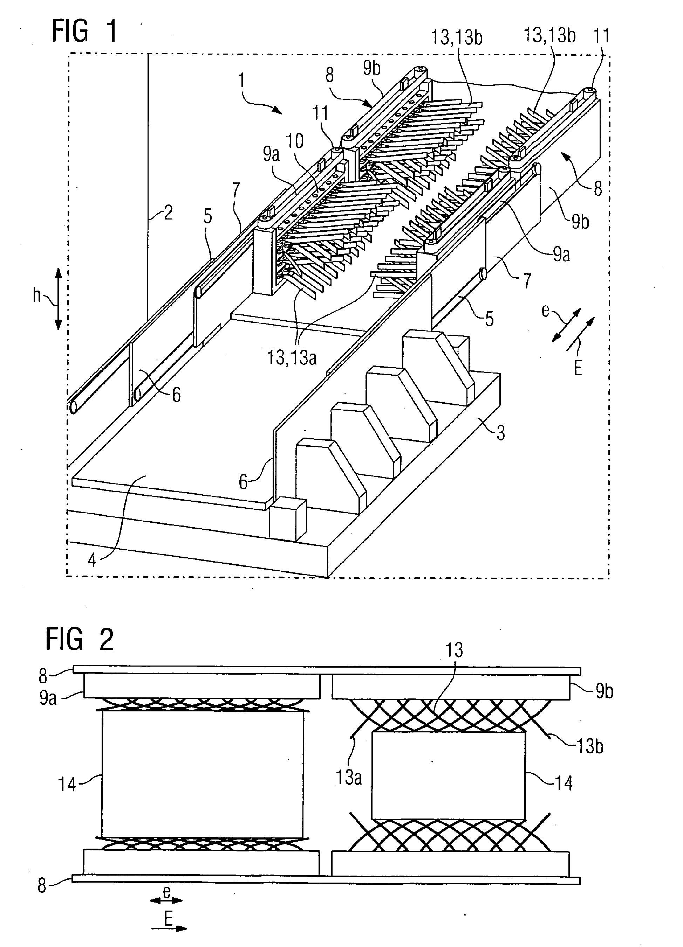

In der Figur 1 ist eine perspektivische schematische Ansicht einer Ein- und Auslagerungsvorrichtung 1 für Stückgüter eines nur auszugsweise dargestellten Regalbediengerätes gezeigt. Von dem Regalbediengerät ist nur abschnittweise ein vertikaler Mast 2 dargestellt, an dem ein Hubtisch 3 vertikal in Hub- und Senkrichtung h verfahrbar ist. Im Sinne der Erfindung werden unter Stückgütern Lasten beziehungsweise Ladehilfsmittel mit oder ohne Lasten, wie beispielsweise Behälter, Kartons und Tablare, verstanden. Vorzugsweise haben die Stückgüter eine Quaderform. Auf dem Hubtisch 3 ist ein ebener und horizontal ausgerichteter Abstellplatz 4 für das beziehungsweise die nicht dargestellten Stückgüter vorhanden. In üblicher Weise verfährt das Regalbediengerät zwischen einer sogenannten Vorzone und einem Hochregal mit einer Vielzahl von in Zeilen und Spalten angeordneten Lagerplätzen. Mittels der auf dem Hubtisch 3 angeordneten Ein-und Auslagerungsvorrichtung 1 werden die Stückgüter einzeln oder in Gruppen aus der Vorzone aufgenommen und in den Lagerplätzen abgestellt beziehungsweise aus den Lagerplätzen aufgenommen und in der Vorzone abgestellt.

Es ist auch möglich, die Ein- und Auslagerungsvorrichtung 1 für einen Etagenförderer oder im Zusammenhang mit anderen fördertechnischen Aufgaben zu verwenden, bei denen eine horizontale Übergabe von Stückgütern zu bewältigen ist.

Für eine Erledigung dieser Aufgaben weist die Ein- und Auslagerungsvorrichtung 1 im Wesentlichen zwei Teleskoparme 5 auf, die jeweils seitlich neben dem Abstellplatz 4 für das Stückgut und somit gegenüber liegend sowie voneinander beabstandet auf dem Hubtisch 3 befestigt sind. Außerdem erstrecken sich diese Teleskoparme 5 in Ein- und Auslagerungsrichtung e und verlaufen parallel zueinander.

Jeder der Teleskoparme 5 besteht aus einem Grundrahmen 6, einem Zwischenelement 7 und einem Greifelement 8. Der Grundrahmen 6 hat etwa die Länge des Abstellplatzes 4 und ist auf den Hubtisch 3 befestigt. An der zu dem Abstellplatz 4 hinweisenden Seite des Grundrahmens 6 ist das Zwischenelement 7 in dessen Längsrichtung und somit in Ein-und Auslagerungsrichtung e verschiebbar geführt. In dem Zwischenelement 7 ist dann das Greifelement 8 in Ein- und Auslagerungsrichtung e und somit in dessen Längsrichtung verschiebbar geführt.

Mittels der gegenüberliegenden Greifelemente 8 kann ein auf dem Abstellplatz 4 ruhendes oder bei einem Lageregal mit doppelt oder mehrfach tiefen Lagerplätzen mehrere Stückgüter in Ein- und Auslagerungsrichtung e hintereinander gleichzeitig ergriffen werden und über die teleskopartige Bewegung der Zwischenelemente 7 und der Greifelemente 8 relativ zu den Grundrahmen 6 in Ein- und Auslagerungsrichtung e verfahren werden.

Die in der Figur 1 dargestellte Ein- und Auslagerungsvorrichtung 1 ist in seiner Ausfahrstellung dargestellt und weist Greifelemente 8 auf, die in einen ersten Abschnitt 9a und einen in Ein- und Auslagerungsrichtung e sich anschließenden zweiten Abschnitt 9b geteilt ist, um zwei Stückguter in Verbindung mit einem doppelt tiefen Lagerplatz eines Regals handhaben zu können.

Jedes der insgesamt vier Greifelemente 8 besteht aus einem Tragrahmen 10, einen Stellantrieb 11, zwei Stellelementen 12a und 12b, einer ersten Gruppe 13a von flexiblen Greifteilen 13 sowie einer zweiten Gruppe 13b von flexiblen Greifteilen 13. Die flexiblen Greifteile 13 erstrecken sich von dem Tragrahmen 10, der in Verlängerung des Grundrahmens 6 und des Zwischenelementes 7 und entsprechend in Ein- und Auslagerungsrichtung e ausgerichtet ist, schräg zur Ein- und Auslagerungsrichtung e und somit auf einander zu. Von den Greifteilen 13 kann somit ein Stückgut in einem vorgewählten Breitenbereich sicher ergriffen werden und wird von den Greifteilen 13, die entsprechend nachgiebig aber dennoch hinreichend stabil sind, kraft- und/oder formschlüssig ergriffen. Vorzugsweise wird das Stückgut aus den Lagerplätzen herausgezogen beziehungsweise in diese hinein geschoben, so dass die Greifteile 13 nur Kräfte in beziehungsweise gegen die Ein- und Auslagerungsrichtung e aufbringen müssen. Die Stückgüter werden von der Ein- und Auslagerungsvorrichtung 1 von den Lagerplätzen beziehungsweise dem Abstellplatz 4 nicht angehoben.

In der Figur 2 ist eine Draufsicht auf die Greifelemente 8 von Figur 1 dargestellt. Der Rest der Ein- und Auslagerungsvorrichtung 1 ist nicht gezeigt. Wie zuvor beschrieben sind die Greifelemente 8 auf die gleichzeitige Handhabung von zwei Stückgütern 14 angepasst, wie es bei doppelt tiefen Lagerplätzen eines Regals vorkommt. Die gezeigten Stückgüter 14 weisen unterschiedliche Breiten auf. Es kann vorkommen, dass in Ein- und Auslagerungsrichtung e gesehen das breitere Stückgut 14 vorne oder hinten im Regal angeordnet ist. Jedes der Greifelemente 8 weist einen ersten Abschnitt 9a von gegenüberliegenden Greifteilen 13 für das vordere Stückgut 14 und einen zweiten Abschnitt 9a von gegenüberliegenden Greifteilen 8 für das hintere Stückgut 14 auf. Im Bereich des ersten Abschnittes 9a, zwischen dessen Greifelementen 8 sich das breitere Stückgut 14 befindet, ist zu erkennen, dass die flexiblen Greifteile 13 stärker in Ein- und Auslagerungsrichtung e abgelenkt sind als im Bereich des zweiten Abschnittes 9b, zwischen dessen Greifelementen 8 das schmalere Stückgut 14 sich befindet.

Auch ist aus der Figur 2 zu entnehmen, dass die Greifteile 13 in eine erste Gruppe 13a und eine zweite Gruppe 13b aufgeteilt sind. Die Greifteile 13 der ersten Gruppe 13a sind im entspannten Zustand, d. h. ohne Kontakt zu einen Stückgut 14, nicht quer zur Ein- und Auslagerungsrichtung e ausgerichtet sondern schräg gegen die Einlagerungsrichtung E. Die Greifteile 13 der zweiten Gruppe 13b sind im entspannten Zustand schräg in die Einlagerungsrichtung E ausgerichtet. Somit können in beiden Bewegungsrichtungen der Ein- und Auslagerungsrichtung e die Stückgüter 14 sicher von den Greifelementen 13 gehalten werden.

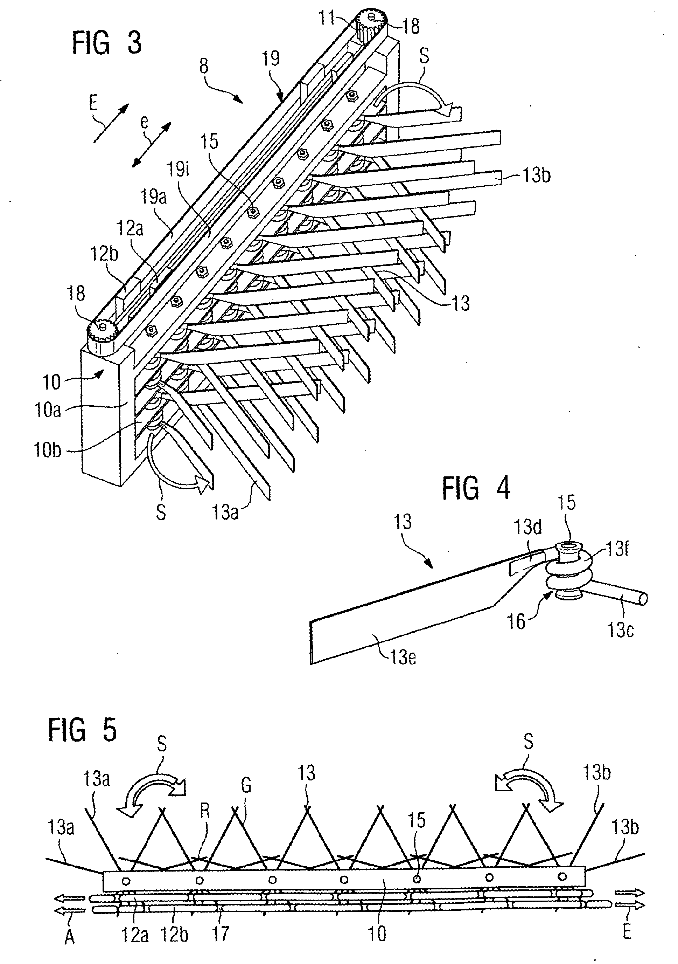

Die Figur 3 zeigt eine vergrößerte perspektivische Ansicht eines der vier Greifelemente 8 der Ein- und Auslagerungsvorrichtung 1. Das zentrale Bauteil des Greifelementes 8 ist ein gitterförmiger Tragrahmen 10 mit einem in Ein- und Auslagerungsrichtung e gesehen am Anfang und einem am Ende angeordneten Querträger 10a, die über fünf jeweils voneinander in Ein- und Auslagerungsrichtung e verlaufende Längsträger 10b miteinander verbunden sind. Zwischen den Längsträgern 10b sind über vertikale und senkrecht zur Ein- und Auslagerungsvorrichtung e ausgerichtete Achsen 15 die Greifteile 13 gelagert. Die Greifteile 13 sind über einen Stellantrieb 11 aus einer Ruhestellung R, in der die Greifteile 13 nahezu in Ein- und Auslagerungsrichtung e ausgerichtet - etwa in einem Bereich von 75 bis 85 Grad zur Ein- und Auslagerungsrichtung e - und an dem Tragrahmen 10 anliegen, in eine Greifstellung G, in der die Greifteile 13 etwa in einem Bereich von 30 bis 60 Grad zur Ein- und Auslagerungsrichtung e ausgerichtet sind und sich von dem Tragrahmen 10 entfernt haben, in Schwenkrichtung S verschwenkbar.

Die Schwenkbewegung der Greifteile 13 aus der Ruhestellung R in die Greifstellung G und zurück wird nach folgend an Hand einer Zusammenschau der Figuren 3 bis 5 erläutert.

Zunächst wird an Hand der Figur 4, die eine vergrößerte Detailansicht eines Greifteils 13 zeigt, dessen Aufbau näher erläutert. Jedes der Greifteile 13 hat die Form eines Winkelhebels mit einem Stellarm 13c, einem Wendelbereich 13f, einem Haltearm 13d und einem Greifarm 13e. Der Stellarm 13c, der Wendelbereich 13f und der Haltearm 13d sind aus einem Draht gebogen, dessen Enden den Stellarm 13c und den Haltearm 13d bilden und in der Mitte etwa zweieinhalb Mal gewendelt ist, um eine Öffnung 16 zum umschließen. Der Stellarm 13c, der Wendelbereich 13f und der Haltearm 13d sind somit relativ biegestarr. Von dem Stellarm 13c und dem Halterarm 13d wird etwa ein Winkel von 110 Grad eingeschlossen. Für die schwenkbare Lagerung des Greifteils 13 wird innerhalb des Tragrahmens 10 durch die Öffnung 16 im Wendelbereich 13f des Greifteils 13 die Achse 15 durchgeführt, die an den Längsträgern 10b des Tragrahmens 10 befestigt ist.

An dem freien Ende des Haltearms 13d ist der eigentliche Greifer in Form eines Greifarms 13e befestigt. Im vorliegenden Fall ist der Greifarm 13e aus Kunststoff und an den Haltearm 13d angegossen. Auch andere geeignete Materialien wie Federstahl sind denkbar. Außerdem ist der flexible Greifarm flach und streifenförmig ausgebildet und somit quer zur Ein- und Auslagerungsrichtung e biegeweich und verhält sich bei ergriffenen Stückgut 14 bei einer Bewegung des Greifelements 8 in Ein- und Auslagerungsrichtung e hinreichend steif, um die für eine sichere Ein- und Auslagerung erforderlichen Kräfte auch bei Stückgütern 14 unterschiedlicher Breiten sicher übertragen zu können.

In der Figur 5 eine schematische Draufsicht auf die Figur 3 dargestellt, um die Antriebsweise für die Bewegung der Greifteile 13 aus der Ruhestellung R in die Arbeitsstellung A und umgekehrt näher zu erläutern. Wesentlicher Bestandteil sind hierfür das erste Stellelement 12a und das zweite Stellelement 12b, die als tafelförmige Lochbleche ausgebildet sind, in deren Löcher 17 jeweils ein Stellarm 13c eines der Greifteile 13 hineinragt. Hierbei ragen die Stellarme 13c der ersten Gruppe 13a von Greifteilen 13 jeweils in die Löcher des ersten Stellelements 12a und die Stellarme 13c der zweiten Gruppe 13b von Greifteilen 13 jeweils in die Löcher des zweiten Stellelements 12b. Das erste Stellelement 12a und das zweite Stellelement 12ba sind in Ein- und Auslagerungsrichtung e verschiebbar in dem Tragrahmen 10 gelagert. In dem ersten Stellelement 12a sind zusätzlich nicht dargestellte Aussparungen vorgesehen, um die Stellarme 13c der zweiten Gruppe 13b der Greifteile 13 ungehindert durchführen zu können.

Durch eine Verschiebung des ersten Stellelements 12a und des zweiten Stellelementes 12b relativ zu dem Tragrahmen 10 werden die in die Löcher 17 der Stellelemente 12a und 12b hineinragenden Stellarme 13c von dem ersten Stellelement 12a beziehungsweise dem zweiten Stellelement 12b in Einlagerungsrichtung E beziehungsweise Auslagerungsrichtung A mitgenommen. Dadurch wird das gesamte Greifteil 13 um die Achse 15 geschwenkt und die Greifarme 13e richten sich aus der Ruhestellung R in die Greifstellung G auf.

Ausgehend von der Ruhestellung R der Greifteile 13 wird durch eine Verschiebung des ersten Stellelementes 12a in Auslagerungsrichtung A die erste Gruppe 13a der Greifteile 13 aus deren Ruhestellung R in deren Greifstellung G geschwenkt. Durch eine anschließende Verschiebung des ersten Stellelementes 12a in Einlagerungsrichtung E werden die Greifteile 13 der ersten Gruppe 13a wieder aus deren Greifstellung G in deren Ruhestellung R zurückgeschwenkt. Entsprechend wird hierdurch ein zuvor ergriffenes Stückgut 14 wieder freigegeben.

Die Bewegung der zweiten Gruppe 13b von Greifteilen 13 erfolgt über das zweite Stellelement 12b. Ausgehend von der Ruhestellung R der Greifteile 13 wird durch eine Verschiebung des zweiten Stellelementes 12a in Einlagerungsrichtung E die zweite Gruppe 13a der Greifteile 13 aus deren Ruhestellung R in deren Greifstellung G geschwenkt. Durch eine anschließende Verschiebung des zweiten Stellelementes 12a in Auslagerungsrichtung A werden die Greifteile 13 der zweiten Gruppe 13b wieder aus deren Greifstellung G in deren Ruhestellung R zurückgeschwenkt. Entsprechend wird hierdurch ein zuvor ergriffenes Stückgut 14 wieder freigegeben.

Um die gegenläufige Bewegung der beiden Stellelemente 12a und 12b für die Verstellung der Greifelemente 13 zu erreichen, sind wie zuvor beschrieben das erste Stellelement 12a und das zweite Stellelement 12b in Ein- und Auslagerungsrichtung e verschiebbar in dem Tragrahmen 10 gelagert. Diese Verschiebebewegung wird über einen Riementrieb mit einem um zwei Umlenkrollen 18 endlos umlaufenden Riemen 19 erreicht. Die Umlenkrollen 18 sind um senkrechte Achsen drehbar auf dem oberen Ende der Querträger 10a des Tragrahmens 10 gelagert. Eine der beiden Umlenkrollen 18 ist über einen nicht dargestellten Antrieb angetrieben. Der Riemen 19 ist mit seinem in Bezug auf das Stückgut 14 gesehen inneren Trum 19i in Ein- und Auslagerungsrichtung e vorne und hinten mit dem ersten Stellelement 12a verbunden. Das gegenüberliegende äußere Trum 19a des Riemens 19 ist in gleicher Weise mit dem zweiten Stellelement 12b verbunden. Da in üblicher Weise das innere Trum 19i und das äußere Trum 19a sich gegenläufig bewegen, kann dies einfach für die Erzeugung der erforderlichen gegenläufigen Bewegung des ersten Stellelements 12a und des zweiten Stellelementes 12b zueinander ausgenutzt werden.

Bevorzugt ist die Verwendung von nur einem Antrieb für die Greifbewegung, um die Anzahl der Antriebe zu minimieren.

### Bezugszeichenliste

- 1: Ein- und Auslagerungsvorrichtung
- 2: Mast
- 3: Hubtisch
- 4: Abstellplatz
- 5: Teleskoparm
- 6: Grundrahmen
- 7: Zwischenelement
- 8: Greifelement
- 9a: erster Abschnitt
- 9b: zweiter Abschnitt
- 10: Tragrahmen
- 10a: Querträger
- 10b: Längsträger
- 11: Stellantrieb
- 12a: erstes Stellelement
- 12b: zweites Stellelement
- 13: Greifteil
- 13a: erste Gruppe
- 13b: zweite Gruppe
- 13c: Stellarm
- 13d: Haltearm
- 13e: Greifarm
- 13f: Wendelbereich
- 14: Stückgut
- 15: Achse
- 16: Öffnung
- 17: Loch
- 18: Umlenkrolle
- 19: Riemen
- 19a: äußeres Trum
- 19i: inneres Trum

- e: Ein- und Auslagerungsrichtung
- h: Hub- und Senkrichtung
- A: Auslagerungsrichtung
- E: Einlagerungsrichtung
- G: Greifstellung
- R: Ruhestellung
- S: Schwenkrichtung

## Patentansprüche

1. Verfahren zum Greifen eines Stückgutes (14) mittels Greifelementen (8) einer Ein- und Auslagerungsvorrichtung (1), insbesondere eines Regalbediengerätes, bei dem für das Greifen des Stückgutes (14) Greifteile (13) der Greifelemente (8) von mindestens zwei gegenüberliegenden Seiten aus einer Ruhestellung (R) in eine Greifstellung (G) auf das Stückgut (14) zu bewegt werden, bis die Greifteile (13) an dem Stückgut (14) anliegen, und anschließend von der Ein- und Auslagerungsvorrichtung (1) in Ein- und Auslagerungsrichtung (e) gefördert werden, wobei die Greifteile (13) aus der Ruhestellung (R) in die Greifstellung (G) um eine oder mehrere quer zur Ein- und Auslagerungsrichtung (e) verlaufende Achsen (15) verschwenkt werden, **dadurch gekennzeichnet, dass** die Greifteile (13) in eine erste Gruppe (13a) und eine zweite Gruppe (13b) geteilt sind, die Greifteile (13) der ersten Gruppe (13a) in ihrer Ruhestellung (R) und in ihrer Greifstellung (G) in Auslagerungsrichtung (A) gerichtet sind, die Greifteile (13) der zweiten Gruppe (13b) in ihrer Ruhestellung (R) und in ihrer Greifstellung (G) in Einlagerungsrichtung (E) gerichtet sind und die Greifteile (13) der ersten Gruppe (13a) gegenläufig zu den Greifteilen (13) der zweiten Gruppe (13b) verschwenkt werden.

2. Verfahren nach Anspruch 1, **dadurch gekennzeichnet, dass** für das Greifen des Stückgutes (14) die Greifteile (13) der Greifelemente (8) von zwei gegenüberliegenden Seiten aus der Ruhestellung (R) in die Greifstellung (G) auf das Stückgut (14) zu bewegt werden und von der Ein- und Auslagerungsvorrichtung (1) in einer im Wesentlichen horizontalen Ein- und Auslagerungsrichtung (e) gefördert werden.

3. Verfahren nach einem der Ansprüche 1 oder 2, **dadurch gekennzeichnet, dass** die . Greifelemente (13) während der Schwenkbewegung aus der Ruhestellung (R) in die Greifstellung (G) bei Kontakt mit dem Stückgut (14) elastisch nachgeben.

4. Ein- und Auslagerungsvorrichtung, insbesondere eines Regalbediengerätes, für die Durchführung des Verfahrens nach einem der Ansprüche 1 bis 3, mit in Ein- und Auslagerungsrichtung (e) bewegbaren Greifelementen (8) mit Greifteilen (13), die für das Greifen eines Stückgutes (14) von mindestens zwei gegenüberliegenden Seiten aus einer Ruhestellung (R) in eine Greifstellung (G) auf das Stückgut (14) zu bewegbar sind, bis die Greifteile (13) sicher an dem Stückgut (14) anliegen, wobei die Greifteile (13) aus der Ruhestellung (R) in die Greifstellung (G) um eine oder mehrere quer zur Ein- und Auslagerungsrichtung (e) verlaufende Achsen (15) verschwenkbar sind, **dadurch gekennzeichnet, dass** eine Vielzahl von Greifteilen (13) an einem Tragrahmen (10) des jeweiligen Greifelementes (8) angeordnet sind und die Greifteile (13) jeweils an ihrem dem Stückgut zugewandten Ende einen flexiblen Greifarm (13e) aufweisen, wobei die aus dem Greifelement (8) herausragenden Greifteile (13) in eine erste Gruppe (13a) und eine zweite Gruppe (13b) geteilt sind, die Greifteile (13) der ersten Gruppe (13a) in ihrer Ruhestellung (R) und in ihrer Greifstellung (G) in Auslagerungsrichtung (A) gerichtet sind und die Greifteile (13) der zweiten Gruppe (13b) in ihrer Ruhestellung (R) und in ihrer Greifstellung (G) in Einlagerungsrichtung (E) gerichtet sind.

5. Ein- und Auslagerungsvorrichtung nach Anspruch 4, **dadurch gekennzeichnet, dass** der Greifarm (13e) streifenförmig ist.

6. Ein- und Auslagerungsvorrichtung nach einem der Ansprüche 4 oder 5, **dadurch gekennzeichnet, dass** die Greifteile (13) in Ein- und Auslagerungsrichtung (e) bürstenartig nebeneinander und übereinander an dem Greifelement (8) angeordnet sind.

7. Ein- und Auslagerungsvorrichtung nach einem der Ansprüche 4 bis 6, **dadurch gekennzeichnet, dass** die Greifteile (13) als Winkelhebel mit einem Stellarm (13c) und einem Greifarm (13e) ausgebildet sind und jedes Greifteil (13) im Bereich seines Winkel über eine Öffnung (16) in dem Greifteil (13) an einer quer zur Ein- und Auslagerungsrichtung (e) ausgerichteten Achse gelagert ist, die an dem Greifelement (8) befestigt ist.

8. Ein- und Auslagerungsvorrichtung nach Anspruch 7, **dadurch gekennzeichnet, dass** die Stellarme (13c) mit einem Stellantrieb (11) für die Bewegung der Greifteile (13) aus der Ruhestellung (R) in die Greifstellung (G) und umgekehrt verbunden sind.

9. Ein- und Auslagerungsvorrichtung nach Anspruch 8, **dadurch gekennzeichnet, dass** der Stellantrieb (11) im Wesentlichen aus einen plattenförmigen Stellelement (12a) mit einer Vielzahl von Löchern (17) für die Aufnahme der Stellarme (13c) besteht und das Stellelement (12a) für die Bewegung der Greifteile (13) aus der Ruhestellung (R) in die Greifstellung (G) und umgekehrt von dem Stellantrieb (11) in Einlagerungsrichtung (E) oder Auslagerungsrichtung (A) verschiebbar ist.

10. Ein- und Auslagerungsvorrichtung nach Anspruch 11, **dadurch gekennzeichnet, dass** ein erstes plattenförmiges Stellelement (12a) und ein zweites plattenförmiges Stellelement (12b) parallel und mit geringem Abstand zueinander in dem Greifelement (8) angeordnet sind und die Stellarme (13c) der ersten Gruppe (13a) der Greifteile (13) mit dem ersten Stellelement (12a) und die Stellarme (13c) der zweiten Gruppe (13b) der Greifteile (13) mit dem zweiten Stellelement (12b) verbunden sind.

11. Ein- und Auslagerungsvorrichtung nach einem der Ansprüche 4 bis 10, **dadurch gekennzeichnet, dass** zwei Greifelemente (8) in einer gemeinsamen Ebene gegenüberliegend und mit Abstand für das Ergreifen eines Stückguts (14) an der Ein- und Auslagerungsvorrichtung (1) angeordnet sind und die Greifelemente (8) in Ein- und Auslagerungsrichtung (e) telekopartig ein- und ausfahrbar sind.

12. Ein- und Auslagerungsvorrichtung nach einem der Ansprüche 4 bis 11, **dadurch gekennzeichnet, dass** die Ein- und Auslagerungsrichtung (e) horizontal ist und die Achsen (15) vertikal verlaufen.

13. Ein- und Auslagerungsvorrichtung nach einem der Ansprüche 4 bis 12, **dadurch gekennzeichnet, dass** die Greifelemente (8) jeweils einen ersten Abschnitt (9a) und einen zweiten Abschnitt (9b) aufweisen, die in Ein- und Auslagerungsrichtung (e) gesehen hintereinander angeordnet sind, und von jedem der Abschnitte (9a und 9b) jeweils ein Stückgut (14) greifbar ist.

## Claims

1. Method of gripping an item of piece goods (14) by means of gripping devices (8) belonging to an arrangement for placing in and withdrawal from store (1), and in particular a rack serving unit, in which method, to allow the item of piece goods (14) to be gripped, gripping members (13) of the gripping devices (8) are moved towards the item of piece goods, from at least two opposite sides, from a rest position(R) to a gripping position (G) until the gripping members (13) are resting against the item of piece goods (14), and are then fed by the arrangement for placing in and withdrawal from store (1) in a direction of placing in and withdrawal from store (e), the gripping members (13) being pivoted from the rest position (R) to the gripping position (G) on one or more axes (15) extending transversely to the direction of placing in and withdrawal from store (e), **characterised in that** the gripping members (13) are divided into a first group (13a) and a second group (13b), the gripping members (13) in the first group (13a) are directed in the direction of withdrawal from store (A) in their rest position (R) and in their gripping position (G), the gripping members (13) in the second group (13b) are directed in the direction of placing in store (E) in their rest position (R) and their gripping position (G), and the gripping members (13) in the first group (13a) are pivoted in the opposite direction from the gripping members (13) in the second group (13b).

2. Method according to claim 1, **characterised in that**, to allow the item of piece goods (14) to be gripped, the gripping members (13) of the gripping devices (8) are moved towards the item of piece goods (14), from two opposite sides, from the rest position(R) to the gripping position (G), and are fed by the arrangement for placing in and withdrawal from store (1) in a substantially horizontal direction of placing in and withdrawal from store (e).

3. Method according to either of claims 1 and 2, **characterised in that**, during the pivoting movement from the rest position (R) to the gripping position (G), the gripping devices (13) yield elastically when in contact with the item of piece goods (14).

4. Arrangement for placing in and withdrawal from store, and in particular a rack serving unit, for carrying out the method according to one of claims 1 to 3, having gripping devices (8) able to be moved in a direction of placing in and withdrawal from store (e), which gripping devices (8) have gripping members (13) which, to allow an item of piece goods (14) to be gripped, are moved towards the item of piece goods, from at least two opposite sides, from a rest position(R) to a gripping position (G) until the gripping members (13) are resting securely against the item of piece goods (14), the gripping members (13) being pivotable from the rest position (R) to the gripping position (G) on one or more axes (15) extending transversely to the direction of placing in and withdrawal from store (e), **characterised in that** a plurality of gripping members (13) are arranged on a supporting frame (10) of the given gripping device (8) and the gripping members (13) each have a flexible gripping arm (13e) at their end adjacent the item of piece goods, the gripping members (13), which project out of the gripping device (8), being divided into a first group (13a) and a second group (13b), the gripping members (13) in the first group (13a) being directed in the direction of withdrawal from store (A) in their rest position (R) and in their gripping position (G), and the gripping members (13) in the second group (13b) being directed in the direction of placing in store (E) in their rest position (R) and their gripping position (G).

5. Arrangement for placing in and withdrawal from store according to claim 4, **characterised in that** the gripping arm (13e) is of a strip-like form.

6. Arrangement for placing in and withdrawal from store according to either of claims 4 and 5, **characterised in that** the gripping members (13) are arranged next to one another in a brush-like form in the direction of placing in and withdrawal from store (e) and are arranged one above the other on the gripping device (8).

7. Arrangement for placing in and withdrawal from store according to one of claims 4 to 6, **characterised in that** the gripping members (13) are in the form of angled levers having a positioning arm (13c) and a gripping arm (13e) and each gripping member (13) is mounted, in the region of its angle, on a shaft extending transversely to the direction of placing in and withdrawal from store (e) by means of an opening (16) in the gripping member (13).

8. Arrangement for placing in and withdrawal from store according to claim 7, **characterised in that** the positioning arms (13c) are connected to a positioning drive (11) for moving the gripping members (13) from the rest position (R) to the gripping position (G) and vice versa.

9. Arrangement for placing in and withdrawal from store according to claim 8, **characterised in that** the positioning drive (11) comprises in essence a plate-like positioning member (12a) having a plurality of holes (17) to receive the positioning arms (13c), and the positioning member (12a) is able to be displaced by the positioning drive (11) in the direction of placing in store (E) or the direction of withdrawal from store (A) to move the gripping members (13) from the rest position (R) to the gripping position (G) and vice versa.

10. Arrangement for placing in and withdrawal from store according to claim 11, **characterised in that** a first plate-like positioning member (12a) and a second plate-like positioning member (12b) are arranged in the gripping device (8) parallel to and at a short distance from one another, and the positioning arms (13c) of the first group (13a) of gripping members (13) are connected to the first positioning member (12a) and the positioning arms (13c) of the second group (13b) of gripping members (13) are connected to the second positioning member (12b)

11. Arrangement for placing in and withdrawal from store according to one of claims 4 to 10, **characterised in that**, to allow a grip to be taken on an item of piece goods (14), two gripping devices (8) are arranged on the arrangement for placing in and withdrawal from store (1) opposite and at a distance from one another in a common plane, and the gripping devices (8) can be extended and retracted telescopically in the direction of placing in store and withdrawal from store (e).

12. Arrangement for placing in and withdrawal from store according to one of claims 4 to 11, **characterised in that** the direction of placing in store and withdrawal from store (e) is horizontal and the axes (15) extend vertically.

13. Arrangement for placing in and withdrawal from store according to one of claims 4 to 12, **characterised in that** the gripping devices (8) each have a first portion (9a) and a second portion (9b) which, looking in the direction of placing in store and withdrawal from store (e), are arranged one behind the other, and one item of pieces goods (14) at a time is able to be gripped by each of the portions (9a and 9b).

## Revendications

1. Procédé de préhension d'une marchandise (14) au moyen d'éléments de préhension (8) d'un dispositif de stockage et de déstockage (1), notamment d'un gerbeur, dans lequel, pour prendre la marchandise (14), des pièces de préhension (13) des éléments de préhension (8) sont déplacées d'une position de repos (R) depuis au moins deux côtés opposés dans une position de préhension (G) sur la marchandise (14) jusqu'à ce que les pièces de préhension (13) portent contre la marchandise (14) puis sont transportées par le dispositif de stockage et de déstockage (1) dans une direction de stockage et de déstockage (e), les pièces de préhension (13) étant pivotées de la position de repos (R) dans la position de préhension (G) autour d'un ou plusieurs axes (15) s'étendant transversalement à la direction de stockage et de déstockage (e), **caractérisé en ce que** les pièces de préhension (13) sont divisées en un premier groupe (13a) et un deuxième groupe (13b), les pièces de préhension (13) du premier groupe (13a) étant orientées dans leur position de repos (R) et leur position de préhension (G) dans une direction de déstockage (A), les pièces de préhension (13) du deuxième groupe (13b) étant orientées dans leur position de repos (R) et leur position de préhension (G) dans une direction de stockage (E) et les pièces de préhension (13) du premier groupe (13a) étant pivotées dans une direction opposée à celle des pièces de préhension (13) du deuxième groupe (13b).

2. Procédé selon la revendication 1, **caractérisé en ce que**, pour prendre la marchandise (14), les pièces de préhension (13) des éléments de préhension (8) sont déplacées de la position de repos (R), depuis deux côtés opposés, dans la position de préhension (G) en direction de la marchandise (14) et sont transportées par le dispositif de stockage et de déstockage (1) dans une direction de stockage et de stockage (e) sensiblement horizontale.

3. Procédé selon l'une des revendications 1 ou 2, **caractérisé en ce que** les pièces de préhension (13) fléchissent élastiquement, pendant le mouvement de pivotement de la position de repos (R) dans la position de préhension (G), lorsqu'elles viennent en contact avec la marchandise (14).

4. Dispositif de stockage et de déstockage, notamment d'un gerbeur, destiné à mettre en oeuvre le procédé selon l'une des revendications 1 à 3, ledit dispositif de stockage et de déstockage comportant des éléments de préhension (8) mobiles dans une direction de stockage et de déstockage (e) et dotés de pièces de préhension (13) qui, pour prendre une marchandise (14), sont déplaçables depuis au moins deux côtés opposés d'une position de repos (R) dans une position de préhension (G) en direction de la marchandise (14) jusqu'à ce que les pièces de préhension (13) portent de façon sûre contre la marchandise (14), les pièces de préhension (13) étant aptes à pivoter de la position de repos (R) dans la position de préhension (G) autour d'un ou plusieurs axes (15) s'étendant transversalement à la direction de stockage et de déstockage (e), **caractérisé en ce qu'**un grand nombre de pièces de préhension (13) sont disposées sur un cadre de support (10) de l'élément de préhension respectif (8) et les pièces de préhension (13) comportent chacune, à leur extrémité dirigée vers la marchandise, un bras de préhension flexible (13e), les pièces de préhension (13) qui font saillie de l'élément de préhension (8) étant divisées en un premier groupe (13a) et un deuxième groupe (13b), les pièces de préhension (13) du premier groupe (13a) étant orientées dans leur position de repos (R) et dans leur position de préhension (G) dans une direction de déstockage (A) et les pièces de préhension (13) du deuxième groupe (13b) sont orientées dans leur position de repos (R) et dans leur position de préhension (G) dans une direction de stockage (E).

5. Dispositif de stockage et de déstockage selon la revendication 4, **caractérisé en ce que** le bras de préhension (13e) a une forme de ruban.

6. Dispositif de stockage et de déstockage selon l'une des revendications 4 ou 5, **caractérisé en ce que** les pièces de préhension (13) sont disposées au niveau de l'élément de préhension (8), dans la direction de stockage et de déstockage (e), l'un à côté de l'autre et l'un au-dessus de l'autre, à la manière d'une brosse.

7. Dispositif de stockage et de déstockage selon l'une des revendications 4 à 6, **caractérisé en ce que** les pièces de préhension (13) sont conformées en levier coudé comportant un bras de commande (13c) et un bras de préhension (13e) et chaque pièce de préhension (13) est montée sur un axe, disposé transversalement à la direction de stockage et de déstockage (e) et fixé à l'élément de préhension (8), dans la région de son coude par une ouverture (16) ménagée dans la pièce de préhension (13).

8. Dispositif de stockage et de déstockage selon la revendication 7, **caractérisé en ce que** les bras de commande (13c) sont reliés à un entraînement de commande (11) afin de déplacer les pièces de préhension (13) de la position de repos (R) dans la position de préhension (G) et inversement.

9. Dispositif de stockage et de déstockage selon la revendication 8, **caractérisé en ce que** l'entraînement de commande (11) est sensiblement constitué d'un élément de commande (12a), en forme de plaque, qui comporte un grand nombre de trous (17) destinés à recevoir les bras de commande (13c) et l'élément de commande (12a) destiné à déplacer les pièces de préhension (13) de la position de repos (R) dans la position de préhension (G) et inversement sont déplaçables dans la direction de stockage (E) ou dans la direction de déstockage (A) au moyen de l'entraînement de commande (11).

10. Dispositif de stockage et de déstockage selon la revendication 11, **caractérisé en ce qu'**un premier élément de commande (12a) en forme de plaque et un deuxième élément de commande (12b) en forme de plaques sont disposés dans l'élément de préhension (8) parallèlement et à faible distance l'un de l'autre et les bras de commande (13c) du premier groupe (13a) de pièces de préhension (13) sont reliés au premier élément de commande (12a) et les bras de commande (13c) du deuxième groupe (13b) de pièces de préhension (13) sont reliés au deuxième élément de commande (12b).

11. Dispositif de stockage et de déstockage selon l'une des revendications 4 à 10, **caractérisé en ce que** deux éléments de préhension (8) sont disposés dans le dispositif de stockage et de déstockage (1), l'un en face de l'autre et à distance dans un plan commun, afin de prendre une marchandise (14) et les éléments de préhension (8) peuvent être escamotés et déployés de façon télescopique dans une direction de stockage et de déstockage (e).

12. Dispositif de stockage et de déstockage selon l'une des revendications 4 à 11, **caractérisé en ce que** la direction de stockage et de déstockage (e) est horizontale et les axes (15) s'étendent verticalement.

13. Dispositif de stockage et de déstockage selon l'une des revendications 4 à 12, **caractérisé en ce que** les éléments de préhension (8) comportent chacun une première portion (9a) et une deuxième portion (9b) qui sont disposées l'une derrière l'autre par référence à la direction de stockage et de déstockage (e), et **en ce qu'**une marchandise (14) peut être prise à chaque fois par chacune des portions (9a et 9b).
